# EUROPEAN PATENT SPECIFICATION

(11) **EP 3 068 584 B1**
(45) Date of publication and mention of the grant of the patent: **01.04.2020**
(21) Application number: 13799720.1
(22) Date of filing: 14.11.2013
(51) Int. Cl.: B25B 27/00, B25B 27/16, F16L 1/26, F16L 23/00, F16L 23/18

(54) **IMPROVED APPARATUSES AND METHODS FOR INSERTION OF GASKETS**
VERBESSERTE VORRICHTUNGEN UND VERFAHREN ZUM EINSETZEN VON DICHTUNGEN
APPAREILS ET PROCÉDÉS AMÉLIORÉS POUR L'INSERTION DE JOINTS D'ÉTANCHÉITÉ

(43) Date of publication of application: 21.09.2016
(73) Proprietor: Flange Skillets International, LLC, Kissimmee FL 34747 (US)
(72) Inventor: LEARY, Steven, Winter Park, Florida 32789 (US); FITZGERALD, Margaret, Winter Park, Florida 32789 (US)
(74) Representative: Boult Wade Tennant LLP
(86) International application number: PCT/US2013/070124
(87) International publication number: WO 2015/073008

(56) References cited:
- WO-A2-2007/083203
- US-A- 1 896 795
- US-A- 3 730 537
- US-A- 4 495 689
- US-A1- 2011 167 607

## Description

### FIELD

The invention relates generally to apparatuses and methods for insertion of gaskets and, more particularly, to an apparatus for and a method of inserting sealing gaskets between flange connectors of adjacent pipe sections of underwater pipe line sections.

### BACKGROUND

In laying underwater pipelines, divers or remotely operated vehicles ("ROV"s) are often utilized to bolt together opposing connector flanges of adjacent pipe sections. Gas and fluid sealing gaskets are typically installed between the flanges. In order to do so, the divers, either directly or through the use of an ROV, often must hold opposing connector flanges in a relatively stationary position in order to insert the fluid sealing gasket between these opposing flanges prior to completing the bolting operations that will join these opposing flanges together.

Some flange assemblies, such as American National Standards Institute (ANSI) specified ring-type joint (RTJ) flange assemblies, are designed such that there is a space or gap between the flange faces to allow all or a portion of a gasket insertion device to remain in the completed assembly once the gasket is in place. However, other types of RTJ flange assemblies, such as the American Petroleum Institute (API) specified (S)BX flange assemblies and "compact flange" assemblies, which use an SPO or IX/HX gasket, do not have a space or gap between the flange faces. These types of flanges may have a ring groove within which a gasket sits when properly aligned with opposing flanges. In such situations, gasket insertion devices that are designed to leave a portion of the device inside of the flange assembly after placement of the gasket cannot be used because there is no gap to accommodate the remaining portion of the device.

When making the bolted connections between opposing flanges, a diver must guard against having his hands caught between the flanges of these adjacent pipe segments to avoid injury. Gasket insertion devices have been utilized to hold the sealing gaskets in a desired position between the opposing flanges to guard against injury to the fingers and hands of the diver and to avoid damage to the gaskets. In order to ensure placement of the gaskets, the gasket insertion devices must be aligned to a proper depth in the gap between faces of opposing flanges. Typically, alignment is accomplished by inserting alignment pins or bolts before securing the opposing flanges together.

US 4495689 A discloses a tool for placement of O-rings and method thereof.

US 2011/167607 A1 discloses an apparatus and method for insertion of gaskets.

It is desirable to have a gasket placement device that provides for easy gasket insertion and alignment without the need for separate placement pins or bolts for alignment.

### SUMMARY

In a claimed embodiment of the present invention, a gasket insertion apparatus is provided, having: a first member having: a bottom frame; and a first arm connected to the bottom frame and extending radially away from the bottom frame. The bottom frame has a first curved surface, the bottom frame having an interior edge inside the curvature of the first curved surface and an exterior edge outside the curvature of the first curved surface. The bottom frame is configured to align a gasket when the gasket is in contact with the interior edge of the first curved surface and the exterior edge of the first curved surface is in contact with at least two bottom connector bolts of a partially connected flange assembly.

In the claimed embodiment, the gasket insertion apparatus includes a top portion connected to the first member at a hinge point such that the top portion may rotate relative to the first member. The top portion includes: a top frame portion having a second curved surface, the top frame portion having an interior edge inside the curvature of the second curved surface and an exterior edge outside the curvature of the second curved surface. The top portion and the first member are configured to secure a gasket there between. The gasket insertion apparatus includes a clamp wire configured to secure the first member and the top portion in a closed position around the gasket. The gasket insertion apparatus may include a hinge extension connected to a distal end of the first arm. The gasket insertion apparatus may include hinge apertures located in the hinge extension and a distal end of a second arm extending radially away from the top frame portion.

In a claimed embodiment of the present invention, a method of installing a gasket in a flange assembly is provided, including: partially connecting opposing flanges of the flange assembly via at least two connector bolts at a bottom portion of the opposing flanges; placing a gasket insertion apparatus, having the gasket in contact therewith, between the opposing flanges until the gasket insertion apparatus rests upon the at least two connector bolts; further connecting the opposing flanges until the gasket is partially within at least one ring grove of the opposing flanges; rotating the gasket insertion apparatus until it no longer contacts the at least two connector bolts; removing the gasket insertion apparatus; and completing connection of the opposing flanges. The gasket insertion apparatus includes: a bottom frame; and a first arm connected to the bottom frame and extending radially away from the bottom frame. The bottom frame has a first curved surface, the bottom frame having an interior edge inside the curvature of the first curved surface and an exterior edge outside the curvature of the first curved surface. The bottom frame is configured to align a gasket when the gasket is in contact with the interior edge of the first curved surface and the exterior edge of the first curved surface is in contact with the at least two bottom connector bolts of a partially connected flange assembly.

The method may include a top portion connected to the bottom frame at a hinge point such that the top portion may rotate relative to the bottom frame. The method may include securing the gasket between the top portion and the bottom frame with a wire clamp. The method may include cutting the wire clamp after the gasket is partially within at least one ring groove of the flange assembly.

### DESCRIPTION OF DRAWINGS

Figure 1 is a front view of a gasket insertion apparatus which does not form part of the claimed invention.
Figure 1A is a front view of a gasket insertion apparatus which does not form part of the claimed invention.
Figure 2 is a modified side view of a gasket insertion apparatus placed between opposing flanges of a flange assembly where the opposing flanges are partially opened towards the side view.
Figure 3 is a side view of the gasket insertion apparatus shown in Figure 2 wherein the flanges have been partially joined together.
Figure 4 is sectional view A of the gasket insertion apparatus and flange assembly shown in Figure 3.
Figure 5 is a front view of a gasket insertion apparatus having a gasket mounted therein according to an exemplary embodiment of the present invention.
Figure 6 is a front view of the gasket insertion apparatus of Figure 5 wherein the gasket has been removed.
Figure 7 is a front view of a gasket insertion apparatus and half of a flange assembly according to an exemplary embodiment of the present invention.
Figure 8 is a front view of a top portion of a gasket insertion apparatus according to an exemplary embodiment of the present invention.
Figure 9 if a front view of bottom portion of a gasket insertion apparatus according to an exemplary embodiment of the present invention.

### DETAILED DESCRIPTION

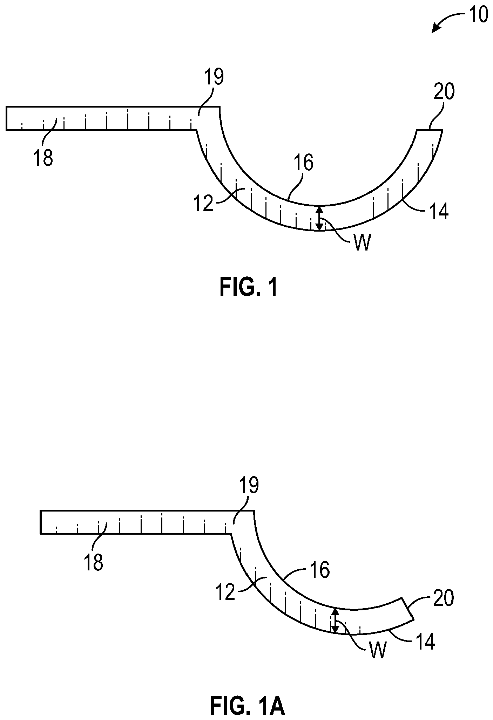

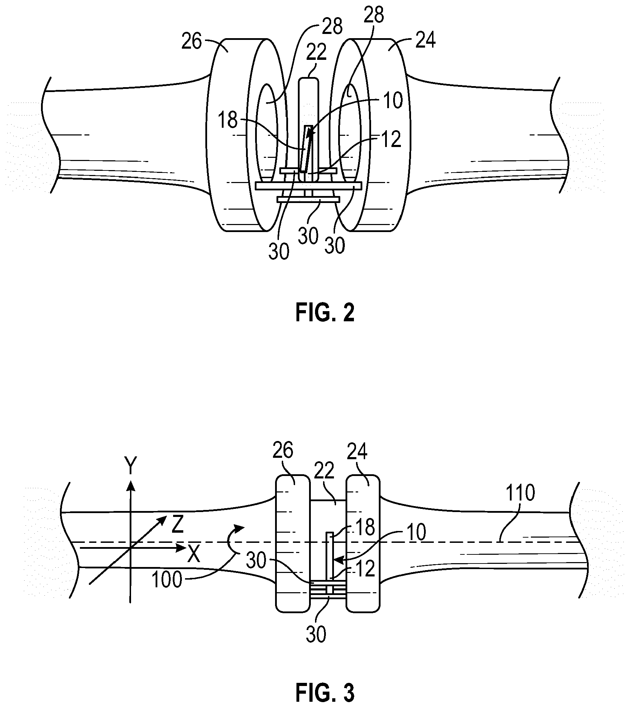

Figure 1 shows a front view of a cradle **10** which does not form part of the present invention. Cradle **10** includes a first member having a first curved surface. The first member may be bottom frame **12.** Extending from the first member is first arm **18.** As shown, first arm **18** extends radially from a first end **19** of the bottom frame **12.** First arm **18** may permit manipulation of the cradle **10** by a diver or ROV. Bottom frame **12** has an exterior edge **14** and an interior edge **16.** A width **W** between exterior edge **14** and interior edge **16** is configured such that a gasket placed in contact with interior edge **16** is aligned with ring grooves **28** of opposing flanges of a flange assembly. See, e.g., Figure 2. The first member may be bottom frame **12** having a curved surface forming all of bottom frame **12.** Alternatively, the first curved surface may be only a portion of the first member. First end **19** and second end **20** of bottom frame **12** may substantially form a half-circle. Bottom frame **12** may be less than a half-circle to facilitate ease of removal of the cradle from a flange assembly. Bottom frame may form approximately a quarter circle. See, e.g., Figure 1A. Bottom frame **12** may have various other curvatures and/or shapes configured to hold a gasket therein.

Figure 2 shows a cradle **10** holding a gasket **22** between first and second flanges **24** and **26** of a flange assembly. Bolts **30** join first and second flanges **24** and **26** at a bottom portion of the flange assembly and exterior edge **14** of the cradle **10** rests upon the bolts **30.** As shown, when exterior edge **14** of the cradle **10** rests upon the bolts **30**, gasket **22** is aligned with ring grooves **28.** As bolts **30** are tightened to bring first and second flanges **24** and **26** closer together, gasket **22** fits into the ring grooves **28.** Once the first and second flanges **24** and **26** are sufficiently close together that gasket **22** has partially fit within at least one of the ring grooves **28**, cradle **10** may be rotated along a center axis **110** of the flange assembly using arm extension **18** until bottom frame **12** is no longer between gasket **22** and bolts **30.** See, e.g., Figure 3. Arrow **100** denotes the direction of rotation of cradle **10.** If facing a face of flange **26**, rotation of cradle **10** is clockwise. Cradle **10** may then be removed from the flange assembly and joining of the flanges may be completed.

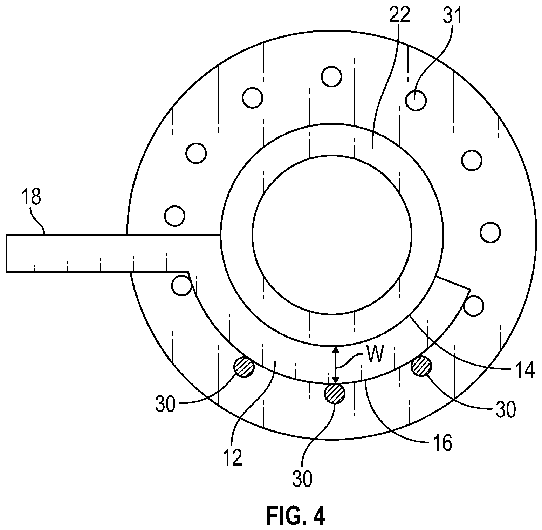

Figure 4 shows a sectional view of a flange assembly where three bolts **30** have been passed through three bolt apertures of the flanges of the flange assembly, partially joining the flanges. As shown, cradle **10** may be placed in the flange assembly such that exterior edge **14** rests upon the bolts **30.** In this position, width **W** of the bottom frame **12** is configured such that interior edge **16** aligns with a ring groove (not shown). Accordingly, when gasket **22** is placed upon interior edge **16** of the cradle **10**, it is properly aligned for installation. Cradle **10** does not require any separate alignment pins or other equipment to align a gasket. Cradle **10** allows for efficient, quick and safe alignment of gaskets.

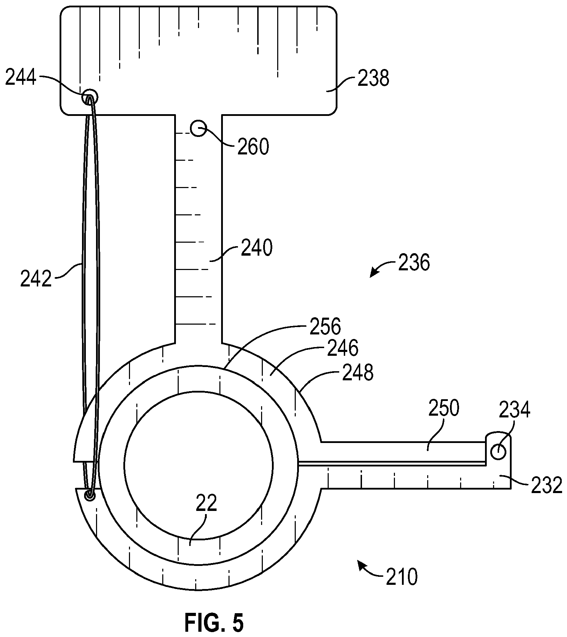

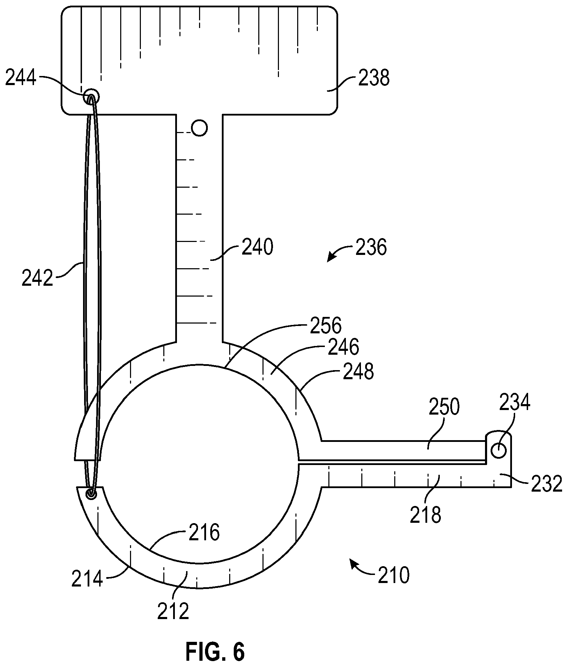

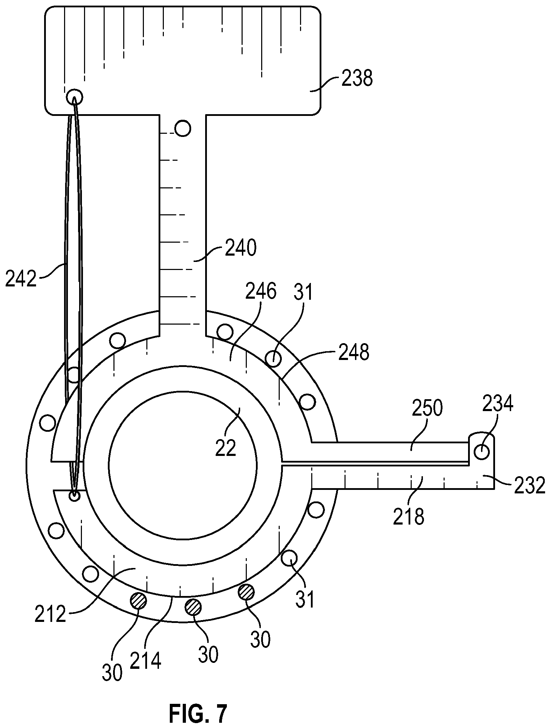

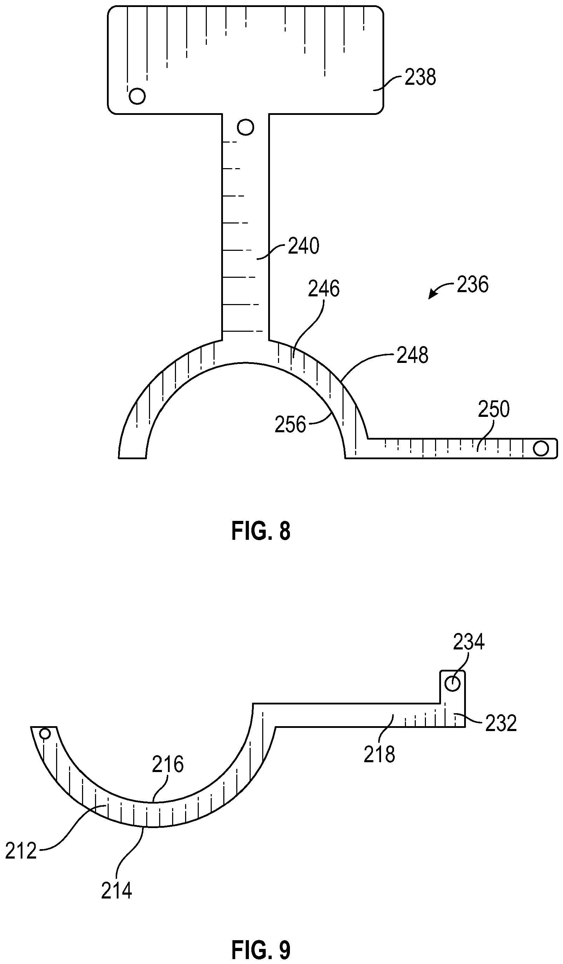

A gasket insertion apparatus according to the invention includes a top portion **236**, which is connected to cradle **210.** See, e.g., Figures 5 to 9. Cradle **210** is substantially similar to cradle **10** and includes all of the features of cradle **10** disclosed herein. In these embodiments, cradle **210** may include a hinge extension **232** and a hinge bolt **234** connecting cradle **210** to top portion **236.** Hinge bolt **234** may be a bolt, a pin, or any other connection allowing top portion **236** to rotate relative to cradle **210** where the axis of rotation is at or near hinge bolt **234.** In alternative embodiments, hinge bolt may connect first arm **218** directly to top portion **236.** Top portion **236** includes a substantially flat, curved top frame **246** having an interior edge **256** and an exterior edge **248.** Top portion **236** also includes second arm **250** extending radially from an end of top frame **246.** Second arm **250** and top frame **246** are configured such that top frame **246** and bottom frame **212** substantially form a circle or a partially open "C" when second arm **250** and first arm **218** are substantially parallel. See, e.g., Figures 6 and 7.

In embodiments of the present invention, top portion **246** may include handle extension **240** and handle grip **238.** Handle extension **240** may include alignment pin aperture **260.** Handle grip **238** may configured as shown in Figures 5 and 6 or may include configurations disclosed in U.S. Patent Application No. 13/354,911 and U.S. Patent Application No. 12/939,071. Handle grip **238** may be configured to permit manipulation of the apparatus by a diver and/or an ROV. Handle grip **238** may allow a diver to align a gasket without placing the diver's hands between the opposing flanges.

Embodiments of the present invention include a clamp wire **242** attachable to the cradle **210** and the top portion **236.** Clamp wire **242** may be secured to the cradle **210** and passed through a clamp aperture **244** of the top portion **236.** Clamp wire **242** may be utilized to secure a gasket **22** between the cradle **210** and the top portion **236.** See, e.g., Figure 5. Clamp wire **242** may be cut allowing top portion **236** to rotate relative to the cradle **210.** When clamp wire **242** is cut and top portion **236** is rotated such that gasket **22** is no longer secured between top potion **236** and the cradle **210**, the cradle **210** may then be rotated as described in reference to Figure 3.

Figure 7 shows an embodiment of the present invention having top portion **236** and clamp wire **242** securing gasket **22** within the apparatus. As shown, exterior edge **214** rests upon bolts **30** passed through bolt apertures **31** located on a bottom portion of the flange. In this position, gasket **22** is aligned for proper installation. Once gasket **22** partially fits within ring groove **28** (not shown in Figure 7), clamp wire **242** may be cut and the apparatus may be removed from the flange assembly.

Cradle **210** and top portion **236** may be made of any structurally suitable material, for example, aluminum or aluminum alloys, steel, stainless steel, mild steel, polymeric composites, sheet metal, and industrial laminates. In some embodiments, the shape of bottom frame **212** and/or top frame **246** may be any of a curve, an arc, a semicircle, or any other shape appropriate to match the contour of a gasket contained therein.

According to an exemplary embodiment of the present invention, a method is provided using cradle **10** (or **210**) to insert gasket **22** into a closed faced connection flange or similar flange assembly having little or no space for any part of the apparatus to remain in the completed assembly. Cradle **10** may be positioned between opposing flanges of a flange assembly such that cradle **10** rests upon connection bolts **31** partially connecting a bottom portion of adjacent pipe pieces. Gasket **22** may be placed within cradle **10** such that it rests upon an interior edge **16** of a bottom frame **12.** A width **W** between interior edge **16** and exterior edge **14** of the bottom frame **12** is configured such that gasket **22** is properly aligned when cradle **10** rests upon connection bolts **30.** Opposing flanges of the flange assembly may be brought together until gasket **22** is partially within ring grooves of the opposing flanges. Cradle **10** may then be rotated until bottom frame **12** is no longer in contact with any of the connector bolts **30.** At that point, cradle **10** may be removed from the flange assembly and the connection of the opposing flanges may be completed.

Certain embodiments of the present invention may include securing gasket **22** between cradle **210** and a top portion **236** prior to placing the cradle **210** between the opposing flanges. Embodiments may include securing cradle **210** and top portion **236** together via a clamp wire **242.** Clamp wire **242** may be cut when gasket **22** is partially within ring grooves of the opposing flanges. Once the clamp wire **242** is cut, top portion **236** may be rotated relative to cradle **210** until cradle **210** may be rotated free of connection bolts **30** and removed from the flange assembly.

While the embodiments are described with reference to various implementations and exploitations, it will be understood that these embodiments are illustrative and that the scope of the inventions is not limited to them. Many variations, modifications, additions, and improvements are possible as defined by the appended claims.

## Claims

1. A gasket insertion apparatus, comprising:
a first member having:
a bottom frame (12, 212);
a first arm (18) connected to the bottom frame (12, 212) and extending radially away from the bottom frame (12, 212);
wherein the bottom frame (12, 212) has a first curved surface, the bottom frame (12, 212) having an interior edge (16) inside the curvature of the first curved surface and an exterior edge (14) outside the curvature of the first curved surface;
wherein the bottom frame (12, 212) is configured to align a gasket (22) when the gasket (22) is in contact with the interior edge (16) of the first curved surface and the exterior edge of the first curved surface is in contact with at least two bottom connector bolts of a partially connected flange assembly,
wherein the gasket insertion apparatus is **characterized in that** it further comprises:
a top portion (236) connected to the first member at a hinge point such that the top portion may rotate relative to the first member,
wherein the top portion (236) comprises:
a top frame (246) portion having a second curved surface, the top frame (246) portion having an interior edge (256) inside the curvature of the second curved surface and an exterior edge (248) outside the curvature of the second curved surface,
wherein the top portion (236) and the first member are configured to secure a gasket (22) there between, and
the gasket insertion apparatus further comprising: a clamp wire (242) configured to secure the first member and the top portion (236) in a closed position around the gasket (22).

2. The gasket insertion apparatus of claim 1, further comprising: a hinge extension (232) connected to a distal end of the first arm (18).

3. The gasket insertion apparatus of claim 2, further comprising: hinge apertures located in the hinge extension (232) and a distal end of a second arm (250) extending radially away from the top frame portion.

4. A method of installing a gasket (22) in a flange assembly, comprising:
partially connecting opposing flanges of the flange assembly via at least two connector bolts at a bottom portion of the opposing flanges;
placing a gasket insertion apparatus, having the gasket (22) in contact therewith, between the opposing flanges until the gasket insertion apparatus rests upon the at least two connector bolts;
further connecting the opposing flanges until the gasket (22) is partially within at least one ring grove of the opposing flanges;
rotating the gasket insertion apparatus until it no longer contacts the at least two connector bolts;
removing the gasket insertion apparatus; and
completing connection of the opposing flanges;
wherein, the gasket insertion apparatus comprises:
a bottom frame (12, 212); and
a first arm (18) connected to the bottom frame (12, 212) and extending radially away from the bottom frame (12, 212);
wherein the bottom frame (12, 212) has a first curved surface, the bottom frame (12, 212) having an interior edge (16) inside the curvature of the first curved surface and an exterior edge (14) outside the curvature of the first curved surface; and
wherein the bottom frame (12, 212) is configured to align a gasket (22) when the gasket (22) is in contact with the interior edge (16) of the first curved surface and the exterior edge (14) of the first curved surface is in contact with the at least two bottom connector bolts of a partially connected flange assembly.

5. The method of claim 4, further comprising:
a top portion (236) connected to the bottom frame (12, 212) at a hinge point such that the top portion (236) may rotate relative to the bottom frame (12, 212).

6. The method of claim 5, further comprising:
securing the gasket (22) between the top portion (236) and the bottom frame (12, 212) with a wire clamp.

7. The method of claim 6, further comprising:
cutting the wire clamp after the gasket (22) is partially within at least one ring groove of the flange assembly.

## Patentansprüche

1. Dichtungseinsetzvorrichtung, umfassend:
ein erstes Element mit:
einem unteren Rahmen (12, 212);
einem ersten Arm (18), der mit dem unteren Rahmen (12, 212) verbunden ist und sich radial von dem unteren Rahmen (12, 212) weg erstreckt;
wobei der untere Rahmen (12, 212) eine erste gekrümmte Oberfläche aufweist, wobei der untere Rahmen (12, 212) eine innere Kante (16) innerhalb der Krümmung der ersten gekrümmten Oberfläche und eine äußere Kante (14) außerhalb der Krümmung der ersten gekrümmten Oberfläche aufweist;
wobei der untere Rahmen (12, 212) konfiguriert ist, um eine Dichtung (22) auszurichten, wenn die Dichtung (22) in Kontakt mit der inneren Kante (16) der ersten gekrümmten Oberfläche steht und die äußere Kante der ersten gekrümmten Oberfläche in Kontakt mit mindestens zwei unteren Verbindungsschrauben einer teilweise verbundenen Flanschanordnung steht,
wobei die Dichtungseinsetzvorrichtung **dadurch gekennzeichnet ist, dass** sie ferner umfasst:
einen oberen Abschnitt (236), der mit dem ersten Element an einem Scharnierpunkt verbunden ist, so dass sich der obere Abschnitt in Bezug auf das erste Element drehen kann,
wobei der obere Abschnitt (236) umfasst:
einen oberen Rahmenabschnitt (246) mit einer zweiten gekrümmten Oberfläche, wobei der obere Rahmenabschnitt (246) eine innere Kante (256) innerhalb der Krümmung der zweiten gekrümmten Oberfläche und eine äußere Kante (248) außerhalb der Krümmung der zweiten gekrümmten Oberfläche aufweist,
wobei der obere Abschnitt (236) und das erste Element konfiguriert sind, um eine Dichtung (22) zwischen ihnen zu sichern, und
die Dichtungseinsetzvorrichtung ferner umfasst: einen Klemmdraht (242), der konfiguriert ist, um in einer geschlossenen Position das erste Element und den oberen Abschnitt (236) um die Dichtung (22) herum zu sichern.

2. Dichtungseinsetzvorrichtung nach Anspruch 1, ferner mit: einer Scharnierverlängerung (232), die mit einem distalen Ende des ersten Arms (18) verbunden ist.

3. Dichtungseinsetzvorrichtung nach Anspruch 2, ferner umfassend: Scharnieröffnungen, die in der Scharnierverlängerung (232) und einem distalen Ende eines zweiten Arms (250) angeordnet sind, der sich radial von dem oberen Rahmenabschnitt weg erstreckt.

4. Verfahren zum Einbau einer Dichtung (22) in eine Flanschanordnung, umfassend:
teilweises Verbinden von gegenüberliegenden Flanschen der Flanschanordnung über mindestens zwei Verbindungsschrauben an einem unteren Abschnitt der gegenüberliegenden Flansche;
Platzieren einer Dichtungseinsetzvorrichtung, mit der die Dichtung (22) in Kontakt steht, zwischen den gegenüberliegenden Flanschen, bis die Dichtungseinsetzvorrichtung auf den mindestens zwei Verbindungsschrauben aufliegt;
weiteres Verbinden der gegenüberliegenden Flansche, bis sich die Dichtung (22) teilweise in mindestens einer Ringnut der gegenüberliegenden Flansche befindet;
Drehen der Dichtungseinsetzvorrichtung, bis sie die mindestens zwei Verbindungsschrauben nicht mehr berührt;
Entfernen der Dichtungseinsetzvorrichtung; und
Fertigstellen der Verbindung der gegenüberliegenden Flansche;
wobei die Dichtungseinsetzvorrichtung umfasst:
einen unteren Rahmen (12, 212);
einen ersten Arm (18), der mit dem unteren Rahmen (12, 212) verbunden ist und sich radial von dem unteren Rahmen (12, 212) weg erstreckt;
wobei der untere Rahmen (12, 212) eine erste gekrümmte Oberfläche aufweist, wobei der untere Rahmen (12, 212) eine innere Kante (16) innerhalb der Krümmung der ersten gekrümmten Oberfläche und eine äußere Kante (14) außerhalb der Krümmung der ersten gekrümmten Oberfläche aufweist;
wobei der untere Rahmen (12, 212) konfiguriert ist, um eine Dichtung (22) auszurichten, wenn die Dichtung (22) in Kontakt mit der inneren Kante (16) der ersten gekrümmten Oberfläche steht und die äußere Kante der ersten gekrümmten Oberfläche in Kontakt mit den mindestens zwei unteren Verbindungsschrauben einer teilweise verbundenen Flanschanordnung steht.

5. Verfahren nach Anspruch 4, ferner umfassend:
einen oberen Abschnitt (236), der mit dem unteren Rahmen (12, 212) an einem Scharnierpunkt verbunden ist, so dass sich der obere Abschnitt (236) relativ zum unteren Rahmen (12, 212) drehen kann.

6. Verfahren nach Anspruch 5, ferner mit dem Schritt:
Sichern der Dichtung (22) zwischen dem oberen Abschnitt (236) und dem unteren Rahmen (12, 212) mit einer Drahtklemme.

7. Verfahren nach Anspruch 6, ferner mit dem Schritt:
Durchschneiden der Drahtklemme, nachdem sich die Dichtung (22) teilweise in mindestens einer Ringnut der Flanschanordnung befindet.

## Revendications

1. Appareil d'insertion de joint d'étanchéité comprenant :
un premier élément ayant :
un cadre inférieur (12, 212) ;
un premier bras (18) connecté au cadre inférieur (12, 212) et s'étendant radialement à l'opposé du cadre inférieur (12, 212) ;
dans lequel le cadre inférieur (12, 212) a une première surface incurvée, le cadre inférieur (12, 212) ayant un bord intérieur (16) à l'intérieur de la courbure de la première surface incurvée et un bord extérieur (14) à l'extérieur de la courbure de la première surface incurvée ;
dans lequel le cadre inférieur (12, 212) est configuré pour aligner un joint d'étanchéité (22) lorsque le joint d'étanchéité (22) est en contact avec le bord intérieur (16) de la première surface incurvée et le bord extérieur de la première surface incurvée est en contact avec au moins deux boulons de connexion inférieurs d'un ensemble de brides partiellement connecté,
dans lequel l'appareil d'insertion de joint d'étanchéité est **caractérisé en ce qu'**il comprend en outre :
une partie supérieure (236) connectée au premier élément au niveau d'un point d'articulation de telle sorte que la partie supérieure peut tourner par rapport au premier élément,
dans lequel la partie supérieure (236) comprend :
une partie de cadre supérieure (246) ayant une seconde surface incurvée, la partie de cadre supérieure (246) ayant un bord intérieur (256) à l'intérieur de la courbure de la seconde surface incurvée et un bord extérieur (248) à l'extérieur de la courbure de la seconde surface incurvée,
dans lequel la partie supérieure (236) et le premier élément sont configurés pour fixer un joint d'étanchéité (22) entre eux, et
l'appareil d'insertion de joint d'étanchéité comprenant en outre : un fil de serrage (242) configuré pour fixer le premier élément et la partie supérieure (236) dans une position fermée autour du joint d'étanchéité (22).

2. Appareil d'insertion de joint d'étanchéité selon la revendication 1, comprenant en outre : une extension d'articulation (232) connectée à une extrémité distale du premier bras (18).

3. Appareil d'insertion de joint d'étanchéité selon la revendication 2, comprenant en outre : des ouvertures d'articulation situées dans l'extension d'articulation (232) et une extrémité distale d'un second bras (250) s'étendant radialement à l'opposé de la partie de cadre supérieure.

4. Procédé d'installation d'un joint d'étanchéité (22) dans un ensemble de brides, comprenant les étapes consistant à :
connecter partiellement des brides opposées de l'ensemble de brides via au moins deux boulons de connexion au niveau d'une partie inférieure des brides opposées ;
placer un appareil d'insertion de joint d'étanchéité, ayant le joint d'étanchéité (22) en contact avec celui-ci, entre les brides opposées jusqu'à ce que l'appareil d'insertion de joint d'étanchéité repose sur les au moins deux boulons de connexion ;
connecter davantage les brides opposées jusqu'à ce que le joint d'étanchéité (22) soit partiellement dans au moins une rainure annulaire des brides opposées ;
faire tourner l'appareil d'insertion de joint d'étanchéité jusqu'à ce qu'il ne soit plus en contact avec les au moins deux boulons de connexion ;
retirer l'appareil d'insertion de joint d'étanchéité ; et
terminer la connexion des brides opposées ;
dans lequel, l'appareil d'insertion de joint d'étanchéité comprend :
un cadre inférieur (12, 212) ; et
un premier bras (18) connecté au cadre inférieur (12, 212) et s'étendant radialement à l'opposé du cadre inférieur (12, 212) ;
dans lequel le cadre inférieur (12, 212) a une première surface incurvée, le cadre inférieur (12, 212) ayant un bord intérieur (16) à l'intérieur de la courbure de la première surface incurvée et un bord extérieur (14) à l'extérieur de la courbure de la première surface incurvée ;
dans lequel le cadre inférieur (12, 212) est configuré pour aligner un joint d'étanchéité (22) lorsque le joint d'étanchéité (22) est en contact avec le bord intérieur (16) de la première surface incurvée et le bord extérieur de la première surface incurvée est en contact avec au moins deux boulons de connexion inférieurs d'un ensemble de brides partiellement connecté.

5. Procédé selon la revendication 4, comprenant en outre :
une partie supérieure (236) connectée au cadre inférieur (12, 212) au niveau d'un point d'articulation de sorte que la partie supérieure (236) peut tourner par rapport au cadre inférieur (12, 212).

6. Procédé selon la revendication 5, comprenant en outre l'étape consistant à :
fixer le joint d'étanchéité (22) entre la partie supérieure (236) et le cadre inférieur (12, 212) à l'aide d'un serre-fil.

7. Procédé selon la revendication 6, comprenant en outre :
couper le serre-fil dès que le joint d'étanchéité (22) est partiellement dans au moins une rainure annulaire de l'ensemble de brides.
